# EUROPEAN PATENT APPLICATION

(11) **EP 2 833 243 A2**
(43) Date of publication of application: **04.02.2015**
(21) Application number: 14177770.6
(22) Date of filing: 21.07.2014
(51) Int. Cl.: G06F 3/02, H01H 13/00

(54) **Keyboard device**

(30) Priority: 31.07.2013 JP 2013159013; 12.09.2013 JP 2013189378
(71) Applicant: Sony Corporation, Tokyo 108-0075 (JP)
(72) Inventor: Kimura, Yasunori, Tokyo, 108-0075 (JP); Chihara, Shuichi, Tokyo, 108-0075 (JP); Tsuji, Yasushi, Tokyo, 108-0075 (JP); Misawa, Junichiro, Tokyo, 108-0075 (JP); Harada, Shingo, Tokyo, 108-0075 (JP)
(74) Representative: Witte, Weller & Partner Patentanwälte mbB

(57) **Abstract**

Provided is a keyboard device including a key top that is arranged in an opening of a cover member and is depressible, a first magnet that is provided in the key top, and a support section that includes a second magnet, to which the first magnet is attracted, and supports the key top. The support section supports the key top to move in a moving direction intersecting with a height direction of the key top, between a first position where the first magnet is attracted to the second magnet and a second position where the attraction by pressing is released. The key top has an inclined surface formed at an edge along the moving direction.

## Description

### CROSS REFERENCE TO RELATED APPLICATIONS

This application claims the benefit of Japanese Priority Patent Application JP 2013-159013 filed July 31, 2013, and Japanese Priority Patent Application JP 2013-189378 filed September 12, 2013, the entire contents of which are incorporated herein by reference.

### BACKGROUND

The present disclosure relates to a keyboard device including depressible key tops.

As a keyboard device, for example, a keyboard of a personal computer including a rubber dome and a scissors mechanism is used. In such a keyboard device, if a user presses a key top, the key top supported horizontally to the scissors mechanism presses down the rubber dome. As a result, a mechanism in which an electrical connection is made in a membrane circuit and an input signal is transmitted is adopted (see JP 2012-129140A).

### SUMMARY

Recently, there is a demand to make a keyboard thinner. In order to meet this demand, there is proposed a method using an attraction force generated in a magnet pair, instead of a rubber dome and a scissors mechanism. In such a method, the attraction force generated in the magnet pair is used as a force for holding a position of a key top. When a user presses the key top, the key top is obliquely pressed down.

By the way, in a case where the key top is obliquely moved, it is expected to enlarge an opening of a cover member in which the key top is arranged, so as to prevent the key top from interfering with the opening of the cover member. However, if the opening is enlarged, a gap between the inner edge of the opening and the key top is noticeable, and there are concerns that the esthetic appearance of the keyboard device will be damaged.

Therefore, the present disclosure proposes a keyboard device that can smoothly press down the keyboard without enlarging the opening of the cover member.

According to an embodiment of the present disclosure, there is provided a keyboard device including a key top that is arranged in an opening of a cover member and is depressible, a first magnet that is provided in the key top, and a support section that includes a second magnet, to which the first magnet is attracted, and supports the key top. The support section supports the key top to move in a moving direction intersecting with a height direction of the key top, between a first position where the first magnet is attracted to the second magnet and a second position where the attraction by pressing is released. The key top has an inclined surface formed at an edge along the moving direction.

According to the present disclosure, by providing the inclined surface, when the key top is moved, there is no interference with the inner edge of the opening where the corresponding key top is provided. Therefore, the key top can be smoothly moved between the first position and the second position. Also, by providing the inclined surface, the gap between the edge of the key top and the inner edge of the opening can be maintained to be small, and thus, it is unnecessary to widen the opening.

As described above, according to the present disclosure, the keyboard can be smoothly pressed down without enlarging the opening of the cover member.

Incidentally, the above effect is not necessarily restrictive and, and in addition to the above effect or alternative to the above effect, any effect set forth in the present specification or other effects grasped from the present specification may be achieved.

### BRIEF DESCRIPTION OF THE DRAWINGS

FIG. 1 is a perspective view illustrating an example of an external configuration of an electronic device according to a first embodiment of the present disclosure;
FIG. 2 is a plan view illustrating an example of a configuration of a body-side housing;
FIG. 3 is a perspective view illustrating an example of a configuration of a keyboard section according to the first embodiment;
FIG. 4 is a perspective view illustrating a disassembled state of the keyboard section according to the first embodiment;
FIG. 5 is an exploded perspective view illustrating an example of a configuration of a support member and a key top;
FIG. 6 is a diagram illustrating a reference position P1 and an input position P2 of a key top;
FIG. 7 is a diagram illustrating a relationship between a key top and an opening;
FIG. 8 is a diagram illustrating a relationship between an inclined surface and an opening when the key top is moved from the reference position to the input position;
FIG. 9 is a diagram for describing an example of the movement of the keyboard section when a user presses down the key top;
FIG. 10 is a diagram illustrating an example of a configuration of an electronic device according to a second embodiment;
FIG. 11 is a diagram illustrating an example of the configuration of the electronic device according to the second embodiment;
FIG. 12 is a diagram illustrating an example of the configuration of the electronic device according to the second embodiment;
FIG. 13 is a diagram for describing a sliding operation of the electronic device according to the second embodiment;
FIG. 14 is a schematic diagram for describing a state in which an end portion of a display-side housing contacts an inclined surface, according to the second embodiment;
FIG. 15 is a schematic diagram for describing a state in which an end portion of a display-side housing contacts a key top, according to comparative example;
FIG. 16 is a perspective view illustrating a configuration of a first embodiment of an inclined surface of a key top according to a third embodiment;
FIG. 17 is a perspective view illustrating a configuration of a first embodiment of a guide surface of a support member according to the third embodiment;
FIG. 18 is a perspective view illustrating a configuration of a first embodiment of a guide surface of a support member according to the third embodiment;
FIG. 19 is a perspective view illustrating a configuration of a second embodiment of an inclined surface of a key top according to the third embodiment;
FIG. 20 is a perspective view illustrating a configuration of a third embodiment of an inclined surface of a key top according to the third embodiment;
FIG. 21 is a perspective view illustrating a configuration of a third embodiment of a guide surface of a support member according to the third embodiment; and
FIG. 22 is a diagram for describing a position relationship between an inclined surface of a key top and a bezel according to the third embodiment.

### DETAILED DESCRIPTION OF THE EMBODIMENT(S)

Hereinafter, preferred embodiments of the present disclosure will be described in detail with reference to the appended drawings. Note that, in this specification and the appended drawings, structural elements that have substantially the same function and structure are denoted with the same reference numerals, and repeated explanation of these structural elements is omitted.

Incidentally, the description will be given in the following order.

### 1. First Embodiment

1-1. Configuration of Keyboard Device
1-2. Detailed Configuration of Keyboard Section
1-3. Relationship between Edge of Key Top and Opening of Bezel
1-4. Example of Movement of Keyboard Section

### 2. Second Embodiment

### 3. Third Embodiment

3-1. Shapes of Inclined Surface of Key Top and Guide Surface of Support Member
3-2. Position Relationship between Inclined Surface of Key Top and Bezel

### 4. Summary

### <1. First Embodiment>

### (1-1. Configuration of Keyboard Device)

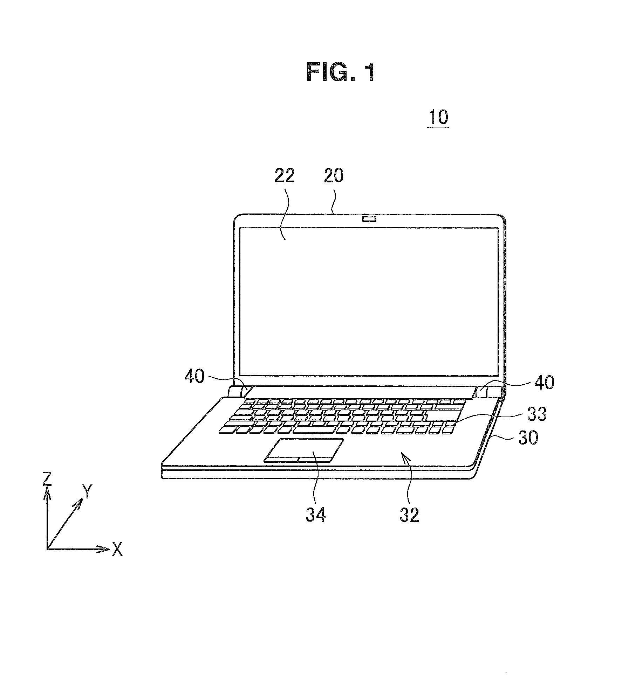

A configuration of a keyboard device according to a first embodiment of the present disclosure will be described below. In the following, an electronic device 10 illustrated in FIG. 1 will be described as an example of the keyboard device.

FIG. 1 is a perspective view illustrating an example of the external configuration of the electronic device 10 according to the first embodiment of the present disclosure. The electronic device 10 is, for example, a notebook personal computer. However, the electronic device 10 is not limited to the notebook personal computer, and may be, for example, a desktop personal computer.

As illustrated in FIG. 1, the electronic device 10 includes a display-side housing 20, a body-side housing 30, and a hinge mechanism section 40. For example, each of the display-side housing 20 and the body-side housing 30 is formed to have a flat-plate shape and is formed to have the same size.

The display-side housing 20 includes a display section 22. The display section 22 includes a display device such as, for example, a liquid crystal display. The display section 22 includes a display screen that displays a variety of information. Incidentally, a touch panel that allows a user to perform a touch operation may be overlapped on the display screen of the display section 22.

The body-side housing 30 includes an input section 32 that receives an input operation of a user. The input section 32 detects the input operation of the user and outputs an electric signal corresponding to the input operation. The user performs the input operation through the input section 32 when the display-side housing 20 is in an open state (FIG. 1).

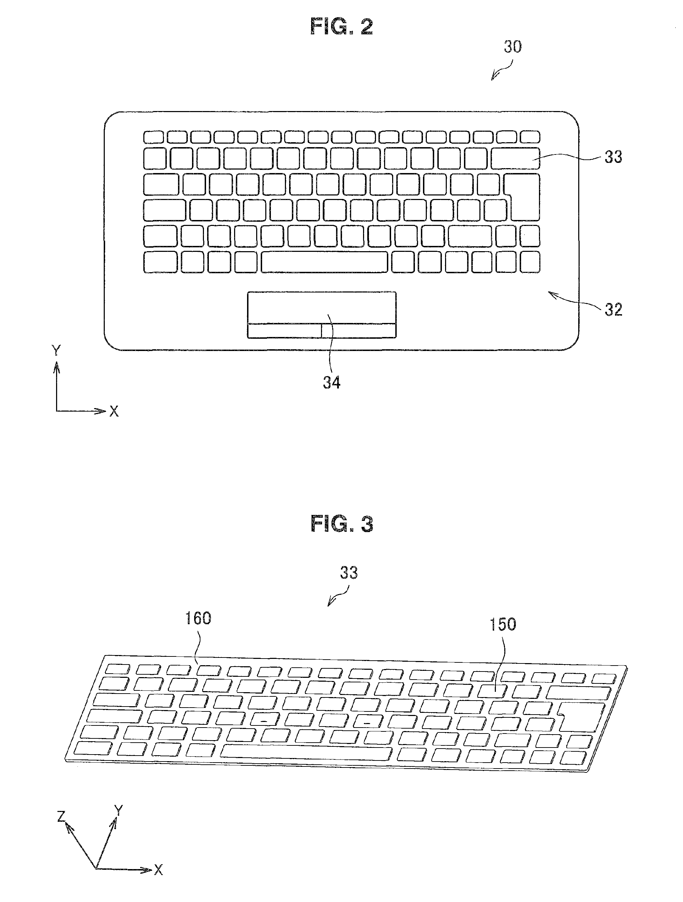

FIG. 2 is a plan view illustrating an example of the configuration of the body-side housing 30. As illustrated in FIG. 2, the input section 32 includes a keyboard section 33 or a touch pad section 34. The keyboard section 33 includes a plurality of operation keys that the user can press down. The touch pad section 34 is an area in which the user can perform a touch input. Incidentally, a detailed configuration of the keyboard section 33 will be described below.

The hinge mechanism section 40 pivotally connects the display-side housing 20 to the body-side housing 30. The hinge mechanism section 40 is provided on both sides of the body-side housing 30 in a longitudinal direction (X direction illustrated in FIG. 1). Due to the hinge mechanism section 40, the display-side housing 20 is pivoted between an open state of being opened with respect to the body-side housing 30 (FIG. 1) and a closed state of being closed with respect to the body-side housing 30.

Incidentally, in the above, the keyboard device has been described as being the personal computer in which the input section 32 and the display section 22 are integrally provided, but is not limited thereto. For example, the keyboard device may be a keyboard that does not include the display section 22 and includes the input section 32. That is, the keyboard device may be configured separately from the display device.

### (1-2. Detailed Configuration of Keyboard Section 33)

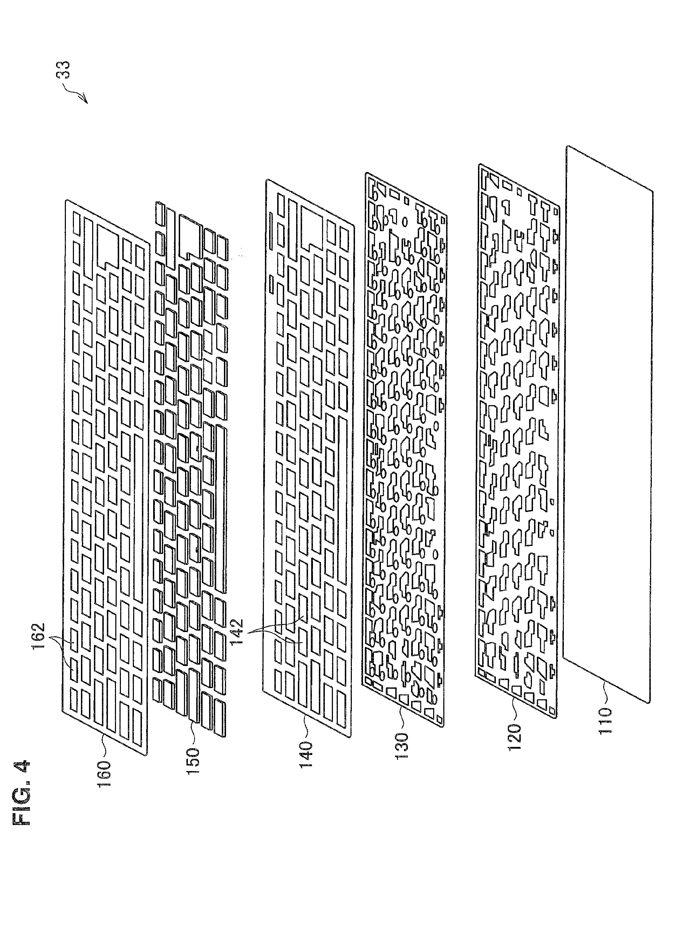

An example of a detailed configuration of the keyboard section 33 according to the first embodiment of the present disclosure will be described with reference to FIGS. 3 and 4. FIG. 3 is a perspective view illustrating an example of the configuration of the keyboard section 33 according to an embodiment. FIG. 4 is a perspective view illustrating a disassembled state of the keyboard section 33 according to an embodiment.

As illustrated in FIG. 4, the keyboard section 33 includes a bottom plate 110, a backlight member 120, a membrane 130, a support member 140, key tops 150, and a bezel 160. The keyboard section 33 is configured by stacking the backlight member 120, the membrane 130, the support member 140, and the key tops 150 in this order between the bottom plate 110 and the bezel 160.

### (Bottom Plate 110)

The bottom plate 110 is provided on the bottom of the keyboard section 33. The bottom plate 110 is a plate-shaped member that has a flat-plate shape and is made of, for example, a metal plate such as an aluminum plate, a resin, or the like. The bottom plate 110 supports the backlight member 120, the membrane 130, the support member 140, the key tops 150, and the bezel 160. Incidentally, similar to the bottom plate 110, the backlight member 120 and the membrane 130 have a flat-plate shape.

### (Backlight Member 120)

The backlight member 120 includes a light-emitting section that is disposed at a position corresponding to the key tops 150. For example, when the surrounding is dark, the light-emitting section is turned on to illuminate the key tops 150. The brightness of the surrounding is detected by, for example, an illumination sensor. By providing the backlight member 120, the user can press down desired key tops 150 even when it is dark.

### (Membrane 130)

The membrane 130 includes, for example, two sheets of film-shaped members, and contacts formed by a pair of electrodes provided in an inner surface of the film-shaped member to be faced at a predetermined interval. The contacts are disposed at positions corresponding to the key tops 150, respectively. When the contacts are contacted, electric signals corresponding to the key tops 150 are output.

### (Support Member 140)

The support member 140 is a support member that supports the plurality of key tops 150. Also, the support member 140 has a function of guiding the key top 150 in a predetermined moving direction when the user presses down the key top 150.

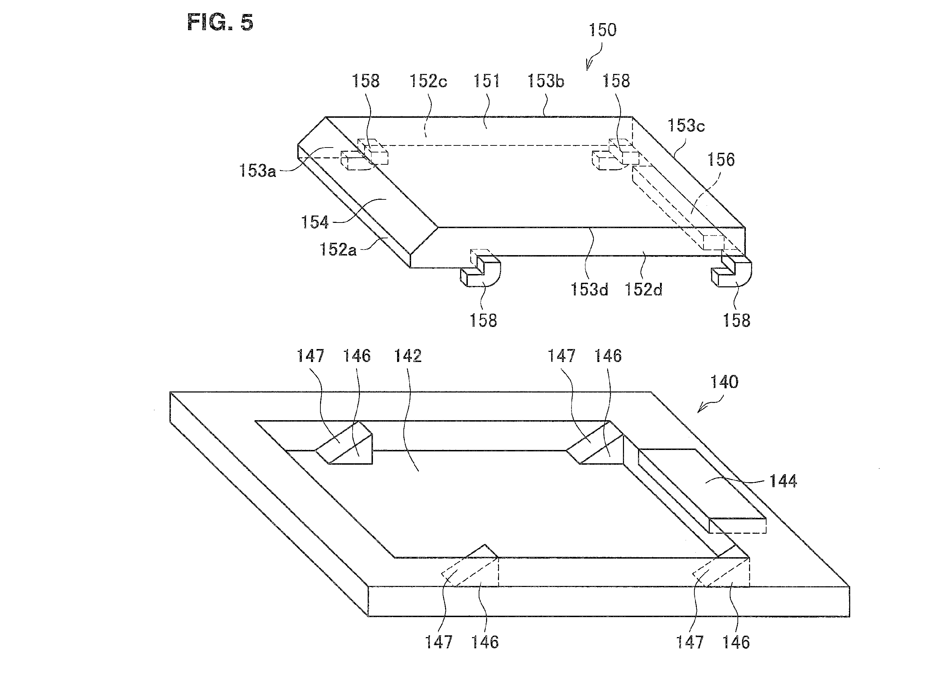

FIG. 5 is an exploded perspective view illustrating an example of the configuration of the support member 140 and the key top 150. Incidentally, in FIG. 5, only a part of the support member 140 (part corresponding to one key top 150) is illustrated. As illustrated in FIG. 5, the support member 140 includes a hole section 142, a magnet 144, and a guide section 146.

The hole section 142 includes a hole that is formed at a position corresponding to the key top 150 and has a rectangular shape larger than the key top 150. When the key top 150 is pressed down, the key top 150 is entered into the hole section 142.

The magnet 144 is provided at a position adjacent to the hole section 142. Specifically, the magnet 144 is provided at a position facing a magnet 156 provided in the key top 150. The magnet 156 is attracted to the magnet 144 by an attraction force generated between the magnet 144 and the magnet 156. Since the magnet 156 is attracted to the magnet 144, the key top 150 before being pressed is maintained at a reference position.

The guide section 146 guides the pressed key top 150 to move obliquely downward. The key top 150 is maintained at the reference position before being pressed as described above, but when a pressing force to the key top 150 is large, the key top 150 can be moved by overcoming the attraction force of the magnet. The guide section 146 is formed to protrude from an edge of the hole section 142 to the inside of the hole section 142. In the present embodiment, the guide section 146 is provided at each of four corners so as to facilitate the movement of the key top 150.

Also, a guide surface 147 which is an inclined surface is formed in the guide section 146. The guide surface 147 is formed in a direction intersecting with a height direction of the key top 150. When pressed down, the key top 150 is moved obliquely downward along the guide surface 147. Also, when the pressing to the key top 150 is released, the key top 150 is moved obliquely upward along the guide surface 147 by the attraction force of the magnet.

### (Key Top 150)

As illustrated in FIG. 3, the key tops 150 are a plurality of operation keys that are arranged in the keyboard section 33 horizontally and vertically. The operation keys are, for example, character or numeric keys, each of which has a rectangular shape. The plurality of key tops 150 are arranged adjacent to one another. When the key top 150 is pressed down from the reference position to the input position, a signal corresponding to the key top 150 is output.

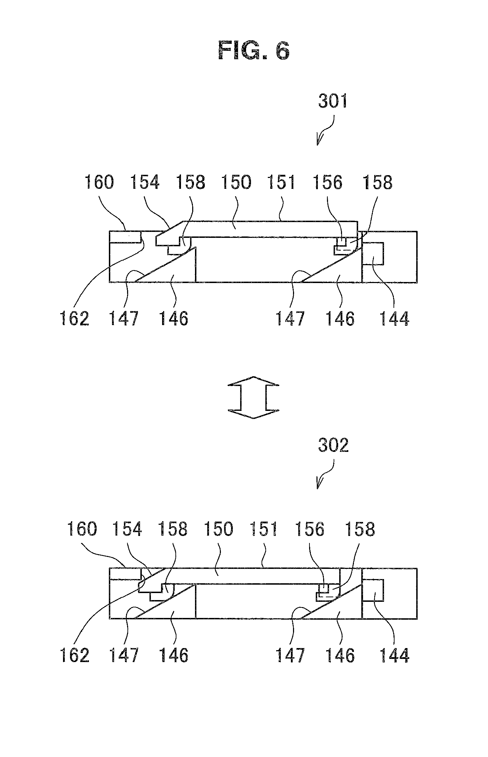

FIG. 6 is a diagram illustrating the reference position P1 and the input position P2 of the key top 150. A state 301 of FIG. 6 indicates the reference position P1 of the key top 150, and a state 302 of FIG. 6 indicates the input position P2 of the key top 150. The key top 150 is maintained at the reference position P1 illustrated in FIG. 6 before being pressed down by the user, and is moved to the input position P2 when being pressed down. The key top 150 is supported by the support member 140 such that the key top 150 is moved in a direction intersecting with the height direction of the key top 150 between the reference position P1 and the input position P2. Incidentally, in the present embodiment, the reference position P1 corresponds to a first position and the input position P2 corresponds to a second position.

Since the configurations of the plurality of key tops 150 are identical to one another, the following description will be given of one key top 150 as an example. The key top 150 includes a top surface 151 that is pressed down by the user, and side surfaces 152a to 152d. Also, as illustrated in FIG. 5, the key top 150 includes the magnet 156 and a sliding section 158.

The magnet 156 is fixed to a position facing the magnet 144 of the support member 140. The magnet 156 is attracted to the magnet 144 by the attraction force. Therefore, before being pressed down, the key top 150 is maintained at the reference position P1 where the magnet 156 is attracted to the magnet 144. On the other hand, when the pressing force to the key top 150 is large, the key top 150 overcomes the attraction force of the magnet and moves to the input position P2. Incidentally, the magnet 156 corresponds to a first magnet and the magnet 144 corresponds to a second magnet.

When the key top 150 is pressed down, the sliding section 158 slides along the guide surface 147 of the support member 140. The sliding section 158 is formed to extend outward from the side surface of the key top 150. When the sliding section 158 slides along the guide surface 147, the key top 150 moves between the reference position and the input position.

### (Bezel 160)

The bezel 160 is a top cover of the keyboard section 33. In the bezel 160, as illustrated in FIG. 4, a plurality of openings 162 is formed such that the key tops 150 are arranged. The opening 162 has a hole with an area slightly larger than that of the arranged key top 150.

As described above, the keyboard section 33 according to the first embodiment includes the magnet 144 provided in the support member 140, and the magnet 156 provided in the key top 150. A magnetic attraction force is generated between the magnet pair, and such attraction force holds the reference position of the key top 150. Therefore, as compared with the configuration using the rubber dome and the scissors mechanism, the thickness of the keyboard section 33 can be reduced.

Incidentally, a method of reducing a thickness of a rubber dome is also proposed. However, if the thickness of the rubber dome is reduced, the buckling characteristic of the rubber dome is deteriorated, and thus, a press feeling (also called a click feeling) of the key top provided to the user is deteriorated. Furthermore, if the thickness of the scissors mechanism is reduced, the strength of the scissors mechanism is lowered and the durability is impaired. In this regard, as in the case of the first embodiment, if the magnets 144 and 156 are used instead of the rubber dome and the scissors mechanism, the deterioration of the click feeling can be suppressed and the strength of the scissors mechanism is not necessarily considered.

### (1-3. Relationship between Edge of Key Top 150 and Opening of Bezel 160)

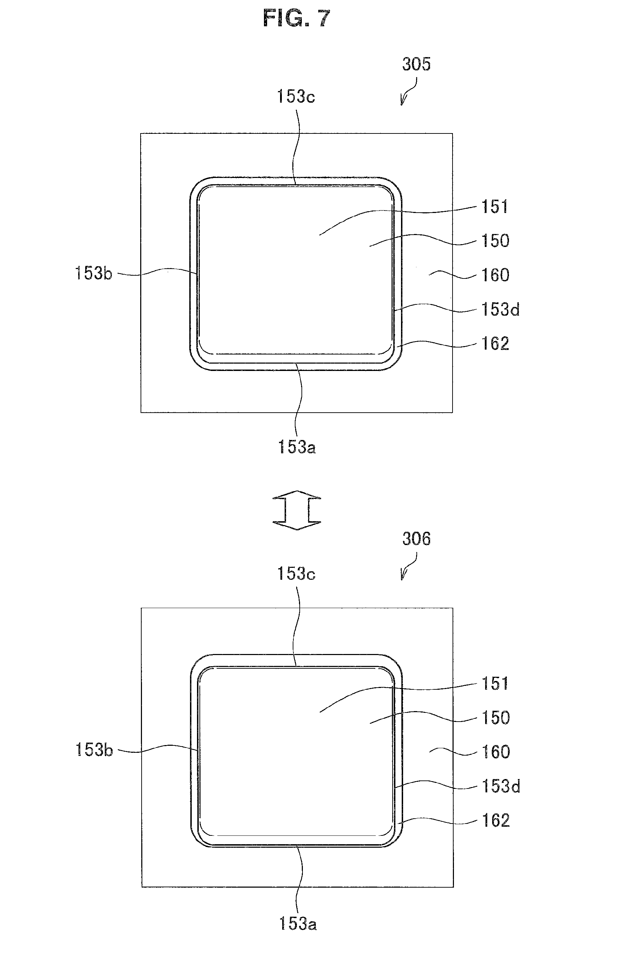

As described above, when the key top 150 is moved between the reference position P1 and the input position P2, the key top 150 is moved obliquely while being supported by the guide section 146. The key top 150 moving in such a manner and the opening 162 have a relationship illustrated in FIG. 7.

FIG. 7 is a diagram illustrating the relationship between the key top 150 and the opening 162. A state 305 of FIG. 7 indicates the relationship between the key top 150 located at the reference position P1 at and the opening 162. A state 306 of FIG. 7 indicates the relationship between the key top 150 located at the input position P2 at and the opening 162.

When the key top 150 is located at the reference position P1, as illustrated in the state 305 of FIG. 7, a distance between an edge 153a (edge 153c) of the key top 150 and an inner edge of the opening 162 that the edge 153a (edge 153c) faces is equal to a distance between an edge 153b (153d) perpendicular to the edge 153a of the key top 150 and an inner edge of the opening 162 that the edge 153b (153d) faces. Therefore, when the key top 150 is located at the reference position P1, a gap of uniform width is formed between the key top 150 and the opening 162. By reducing the gap, the design of arrangement of the key tops 150 can be improved.

When the key top 150 is moved to the input position P2, the edge 153a of the key top 150 moved obliquely downward approaches the inner edge of the opening 162. When the key top 150 is located at the input position P2, as illustrated in the state 306 of FIG. 7, a distance between the edge 153a and the inner edge of the opening 162 that faces the edge 153a is smaller than a distance between other edges 153b to 153d and the inner edge of the opening 162.

By the way, the key top 150 has an inclined surface 154 formed at the edge 153a along the moving direction of the key top 150. When the key top 150 is moved to the input position P2, the inclined surface 154 has a runout shape to prevent the contact with the inner edge of the opening 162. Therefore, it is possible to prevent the gap between the edge 153a and the inner edge of the opening 162 from being widened. In other words, it is possible to prevent the opening 162 from being enlarged.

As illustrated in FIG. 5, the inclined surface 154 is a surface that connects the top surface 151 and the side surface 152a of the key top 150. The inclined surface 154 is formed by chamfering the edge 153a between the top surface 151 and the side surface 152a. For example, the inclined surface 154 is a flat surface formed by so-called C chamfering. Therefore, when the key top 150 is pressed down and moved obliquely downward, the simple configuration can effectively prevent the edge 153a from contacting the inner edge 163a of the opening 162.

The inclined surface 154 may be formed in parallel to the guide surface 147 of the support member 140. In this case, the inclined surface 154 is formed in parallel to the moving direction of the key top 150 supported by the support member 140. Therefore, when the key top 150 is moved, it is possible to more effectively prevent the edge 153a of the key top 150 from contacting the inner edge 163a of the opening 162. Incidentally, when the guide surface 147 is not the flat surface, it is desirable that the inclined surface 154 is also formed to match with the shape of the guide surface 147.

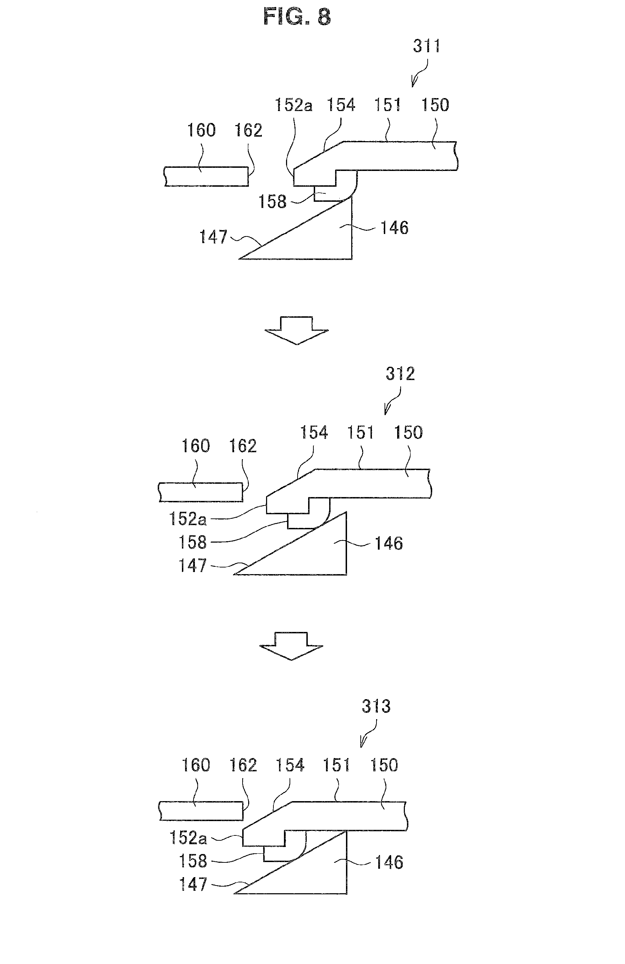

FIG. 8 is a diagram illustrating a relationship between the inclined surface 154 and the opening 162 when the key top 150 is moved from the reference position to the input position. In a state 311 of FIG. 8, the key top 150 is located at the reference position P1. In a state 312, the key top 150 is being moved from the reference position P1 to the input position P2. In a state 313, the key top 150 is located at the input position P2. As illustrated in FIG. 8, by providing the inclined surface 154, when the key top 150 is moved to the input position P2, the edge of the key top 150 can be smoothly moved without being caught by the inner edge of the opening 162.

Incidentally, in the above, the inclined surface 154 has been described as being the flat surface, but it is not limited thereto. For example, the inclined surface 154 may be a curved surface. For example, the inclined surface 154 is formed by so-called R chamfering. When the inclined surface 154 is the curved surface, it is possible to prevent the distance to the inner edge from being narrowed, while preventing the contact with the inner edge of the opening 162.

Also, in the above, the inclined surface 154 has been described as being formed at the edge 153a (FIG. 7) of the key top 150, but it is not limited thereto. For example, the inclined surface 154 may be formed at the edge 153c of the side opposite to the moving direction in which the key top 150 is moved from the reference position to the input position in the edges 153a to 153d of the key top 150. More specifically, the edge 153c may extend to be inserted into the lower portion of the bezel 160, and the inclined surface 154 may be formed at the extended edge 153c. In the case of this configuration, when the key top 150 is pressed down, it is possible to reduce the gap between the edge 153c and the inner edge of the adjacent opening 162.

Also, the inclined surface 154 may be formed at each of the edge 153a and the edge 153c of the key top 150. Incidentally, in the first embodiment, the edge 153a corresponds to a first edge and the edges 153b and 153d correspond to a second edge.

### (1-4. Example of Movement of Keyboard Section 33)

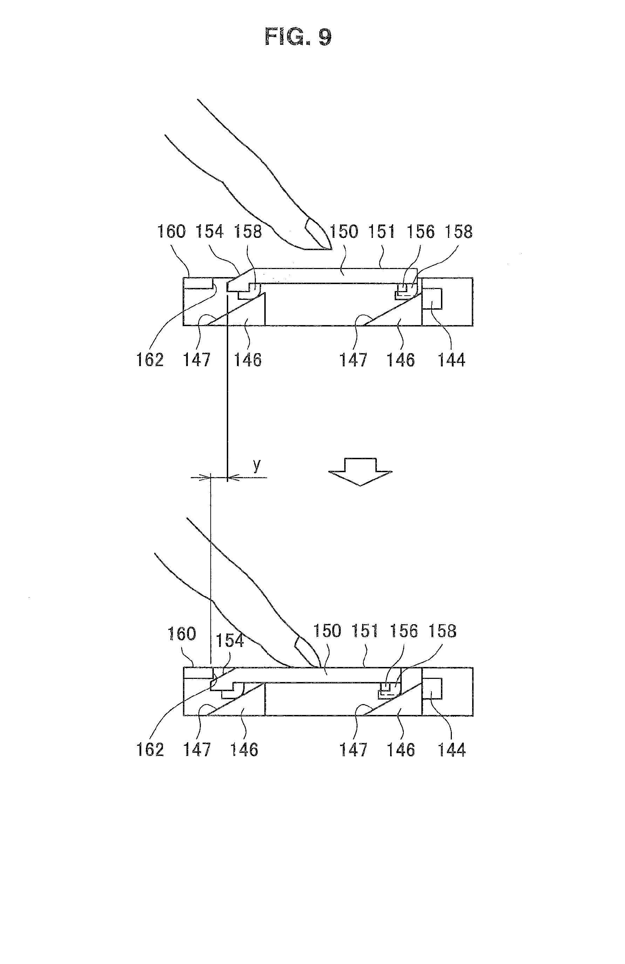

An example of the movement of the keyboard section 33 when a user presses down the key top 150 will be described with reference to FIG. 9. FIG. 9 is a diagram for describing an example of the movement of the keyboard section 33 when a user presses down the key top 150.

Herein, since the magnet 156 is attracted to the magnet 144 of the support member 140, the key top 150 is located at the reference position P1. In this state, the user presses down the top surface 151 of the key top 150 with a finger in order to input with the key top 150.

When the pressing force to the top surface 151 is small, the key top 150 is not moved, and when the pressing force is large, the key top 150 overcomes the attraction force of the magnet and starts to move obliquely downward. Specifically, the key top 150 is moved along the guide surface 147 of the support member 140 in a direction from a back side to a front side when viewed from the user.

At this time, since the inclined surface 154 is formed at the edge 153a (FIG. 7) of the key top 150, when the key top 150 is moved along the guide surface 147, the edge 153a of the key top 150 does not interfere with the inner edge of the opening 162 of the bezel 160. As a result, the key top 150 is smoothly moved by a movement amount y from the back side to the front side as illustrated in FIG. 9 and is located at the input position P2.

When the pressing to the top surface 151 is released, the key top 150 located at the input position P2 is moved upward along the guide surface 147 by the attraction force between the magnet 156 and the magnet 144. The key top 150 is located at the reference position P1 where the magnet 156 is attracted to the magnet 144.

Also, in the above, the pressed key top 150 has been described as being moved from a back side to a front side when viewed from the user, but it is not limited thereto. For example, the pressed key top 150 may be moved from the front side to the back side when viewed from the user. In this case, by forming the inclined surface in the edge 153c of the key top 150, it is possible to prevent the contact with the inner edge of the opening 162 during movement. Similarly, the pressed key top 150 may be moved in a horizontal direction when viewed from the user.

### <2. Second Embodiment>

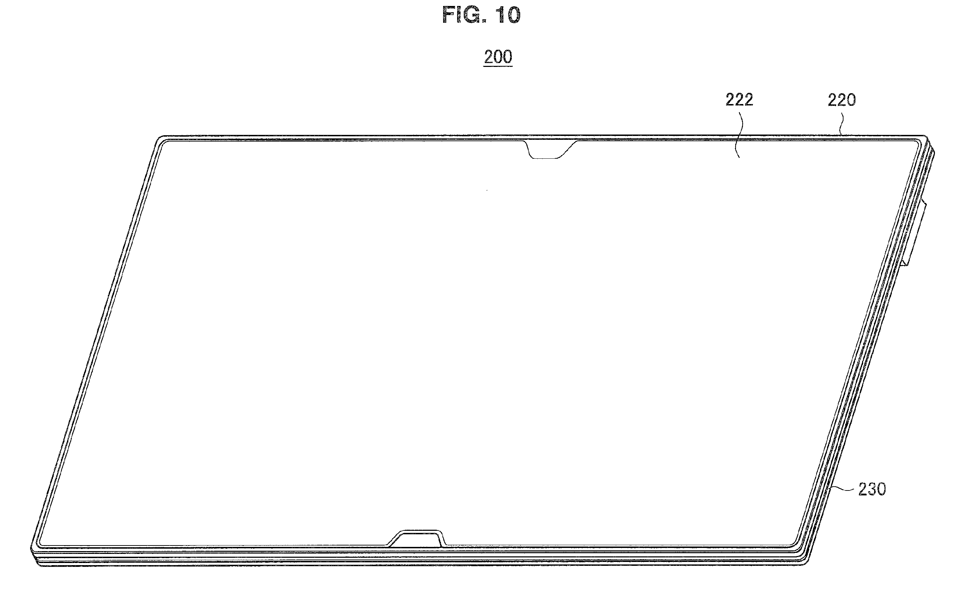

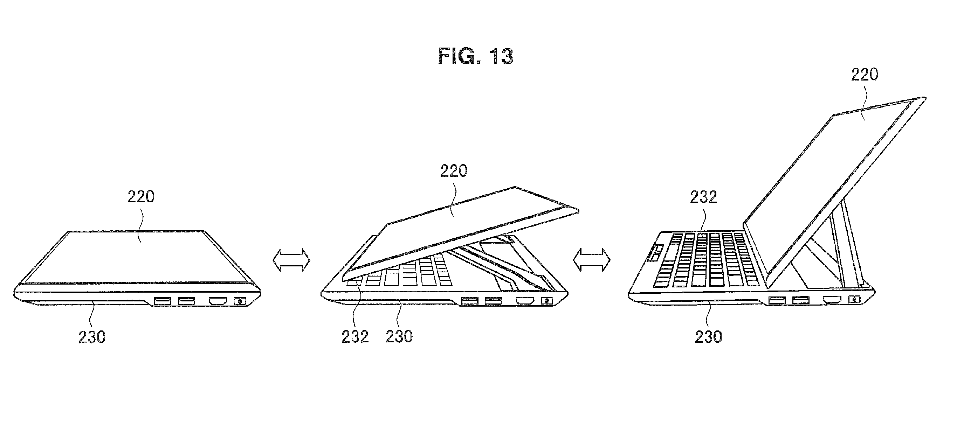

A second embodiment will be described with reference to FIGS. 10 to 13. FIGS. 10 to 13 are diagrams illustrating an example of a configuration of an electronic device 200 according to a second embodiment. FIG. 13 is a diagram for describing a sliding operation of the electronic device 200.

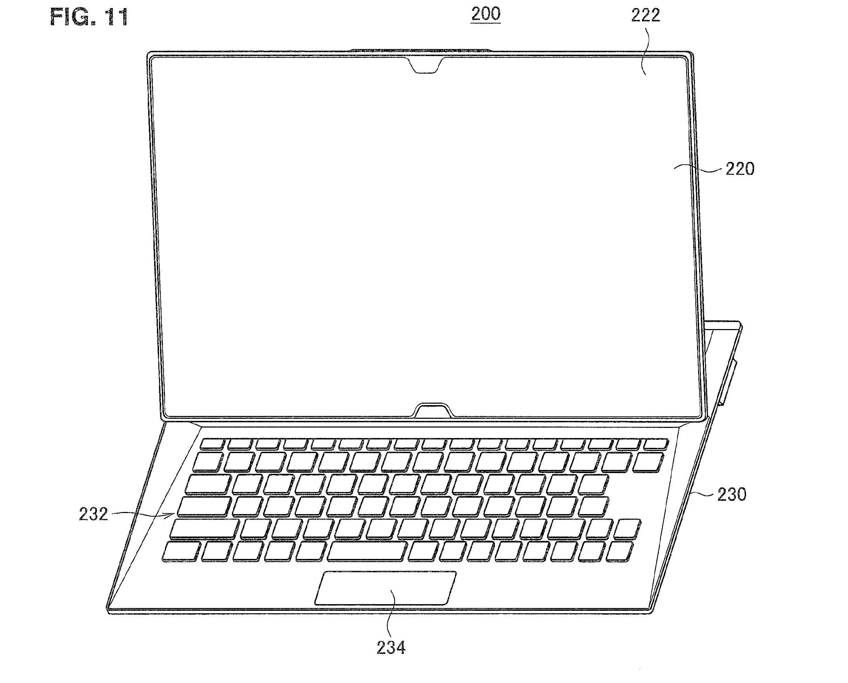

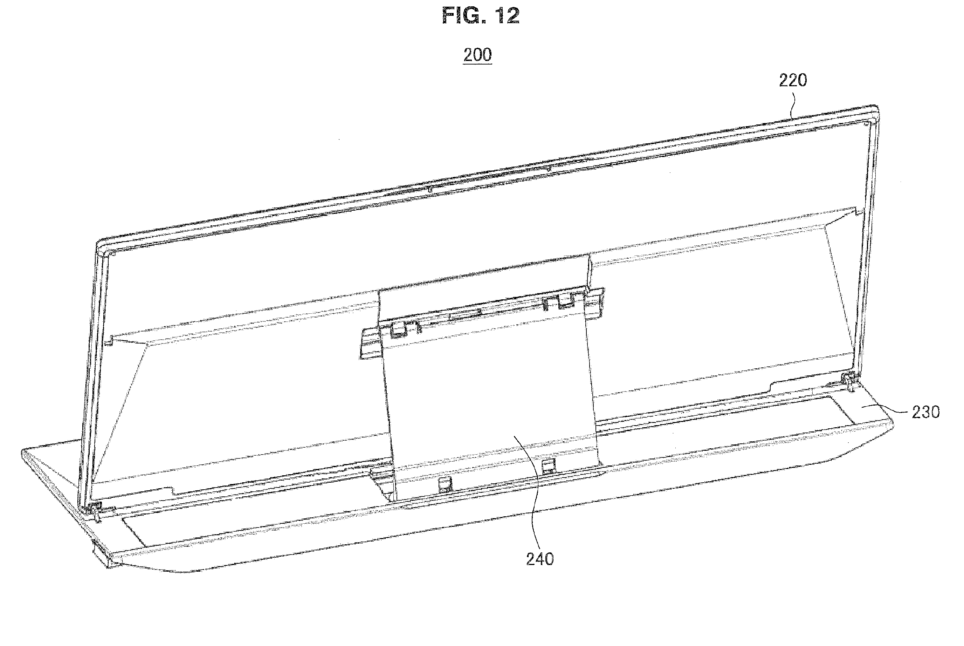

FIG. 10 illustrates a state in which the display-side housing 220 is overlapped on the body-side housing 230 of the electronic device 200. FIG. 11 illustrates a state in which the display-side housing 220 is slid with respect to the body-side housing 230 to stand erect. FIG. 12 illustrates a state when the electronic device 200 which is in the state of FIG. 11 is viewed from the back side.

As illustrated in FIGS. 10 and 11, the electronic device 200 according to the second embodiment includes a display-side housing 220 and a body-side housing 230. In the display-side housing 220, a touch panel 222 in which a touch sensor is provided on a display device such as an LCD is installed. In the body-side housing 230, a keyboard section 232 is provided. In the second embodiment, the body-side housing 230 corresponds to a first housing, and the display-side housing 220 corresponds to a second housing.

As illustrated in FIG. 13, the display-side housing 220 is configured to be movable while sliding with respect to the body-side housing 230. Specifically, the body-side housing 230 and the display-side housing 220 are connected through a hinge 240 provided on a back side. Therefore, as illustrated in FIG. 13, the display-side housing 220 performs a sliding operation with respect to the body-side housing 230. As a result, the state illustrated in FIG. 10 and the state illustrated in FIG. 11 mutually transition.

In the electronic device 200, operation methods of the user are different according to the states. In the state illustrated in FIG. 10, the user can perform a desired operation by operating the touch panel 222. Therefore, the user can use the electronic device 200 as a so-called tablet terminal. In the state illustrated in FIG. 11, the user can perform a desired operation by operating a keyboard section 232 or a touch pad 234. Also, the user can operate the touch panel 222.

By the way, the keyboard section 232 according to the second embodiment has substantially the same configuration as the keyboard section 33 (FIGS. 3 and 4) according to the first embodiment. Akey top 250 of the keyboard section 232 has an inclined surface 254 at an edge. Therefore, it is possible to prevent an opening, in which the key top 250 is arranged, from being enlarged.

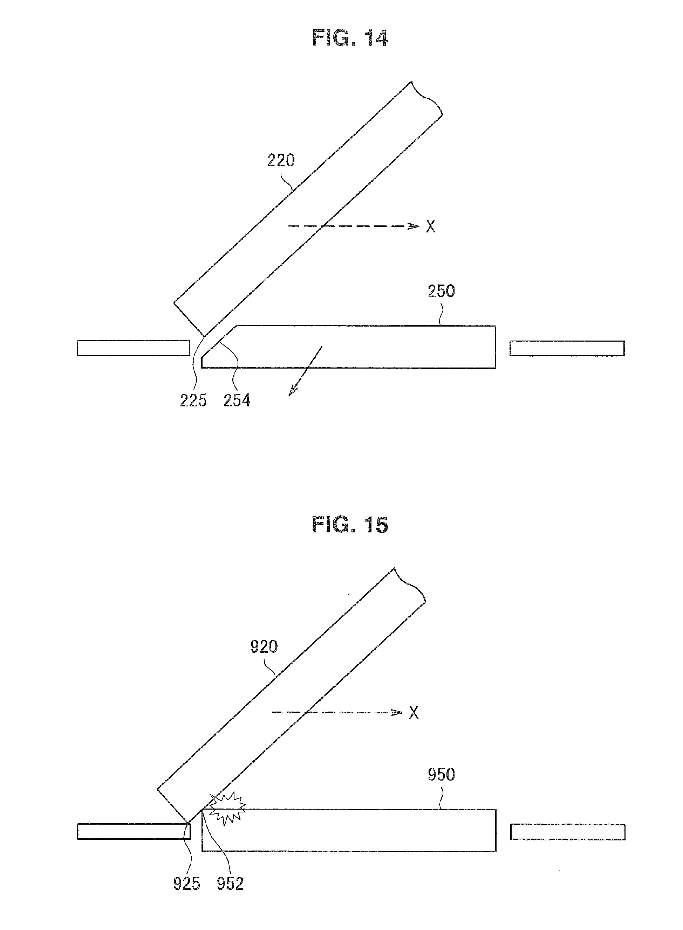

Also, in the second embodiment, when the display-side housing 220 slides with respect to the body-side housing 230, an end portion 225 of the display-side housing 220 is configured to be contactable with the key top 250 (specifically, the inclined surface 254) as illustrated in FIG. 14. FIG. 14 is a schematic diagram for describing a state in which the end portion 225 of the display-side housing 220 contacts the inclined surface 254, according to the second embodiment.

For example, when the user slides the display-side housing 220 in the X direction illustrated in FIG. 14 while strongly pressing the display-side housing 220 downward, the end portion 225 of the pressed display-side housing 220 easily contacts the key top 250. By providing the inclined surface 254, it is possible to prevent the problem that the key top 250 falls out when the display-side housing 220 slides. In the following paragraphs, details will be described by comparing with a comparative example illustrated in FIG. 15.

FIG. 15 is a schematic diagram for describing a state in which an end portion of a display-side housing 920 contacts a key top 950, according to a comparative example. Incidentally, in the key top 950 according to the comparative example, unlike the second embodiment, no inclined surface is formed. In this case, when the display-side housing 920 slides with respect to the body-side housing 930, an end portion 925 of a lower side of the display-side housing 920 contacts an edge 952 of the key top 950. After that, when the sliding of the display-side housing 920 is continued, the end portion 925 is caught by the edge 952 of the key top 950, and thus, there are concerns that the key top 950 may be released (the released key top 950 may fly apart). Also, there are concerns that the key top 950 may be damaged.

In contrast, in the second embodiment, the end portion 225 of the display-side housing 220 contacts the inclined surface 254 as illustrated in FIG. 14. Therefore, after that, when the sliding of the display-side housing 220 is continued, the end portion 225 is not caught by the key top 250 and the key top 250 is pressed. Also, it is possible to suppress the damage in the key top 250.

### <3. Third Embodiment>

A configuration of a keyboard section 33 according to a third embodiment, which is different from the first embodiment, will be described below.

### (3-1. Shapes of Inclined Surface of Key Top 150 and Guide Surface of Support Member 140)

First, three embodiments about the shapes of the inclined surface 154 of the key top 150 and the guide surface 147 of the support member 140 will be described.

### (First Embodiment)

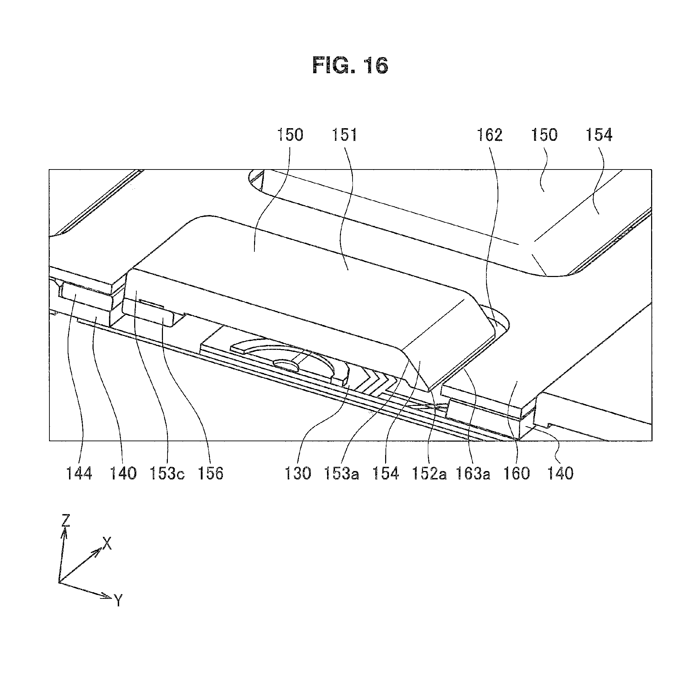

FIG. 16 is a perspective view illustrating a configuration of a first embodiment of the inclined surface 154 of the key top 150 according to the third embodiment. Incidentally, the key top 150 illustrated in FIG. 16 is located at a reference position before pressing.

In the example illustrated in FIG. 16, as in the case of the first embodiment, the inclined surface 154 is a flat surface (also called a C plane) formed by so-called C chamfering. Therefore, it is possible to form the inclined surface 154 through simple processing, and it is possible to effectively prevent the edge 153a of the key top 150 from contacting the inner edge 163a of the opening 162.

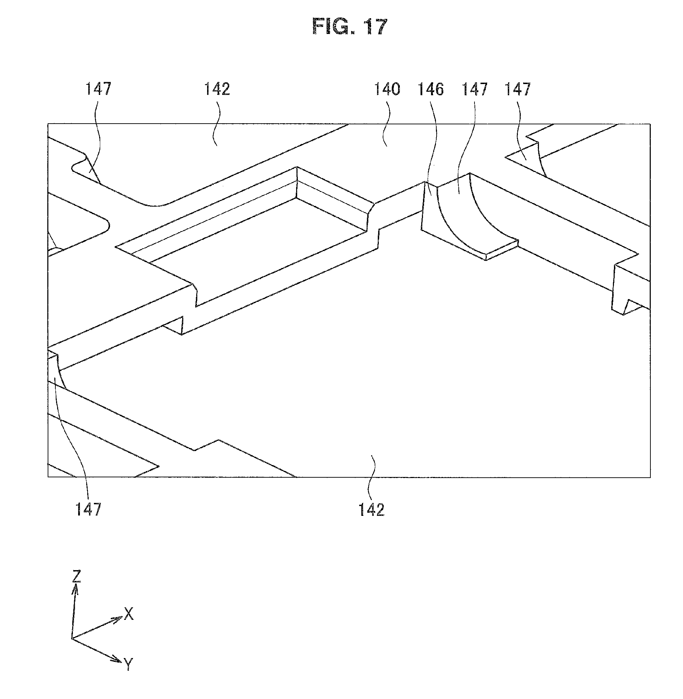

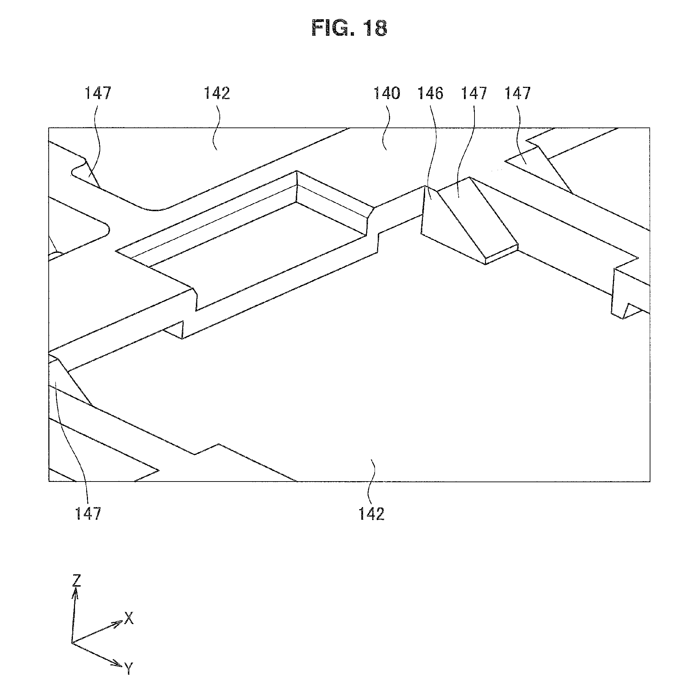

On the other hand, as the shape of the guide surface 147 of the support member 140 that guides the movement of the key top 150 between the reference position and the input position, the shape illustrated in FIG. 17 or 18, which will be described below, is desirable.

FIG. 17 is a perspective view illustrating a configuration of a first embodiment of the guide surface 147 of the support member 140 according to the third embodiment. In the example illustrated in FIG. 17, the guide surface 147 is a curved inclined surface. More specifically, the guide surface 147 is a concavely curved surface. In this case, during the movement of the key top 150, the edge 153a (FIG. 16) of the key top 150 is slightly separated from the inner edge 163a of the opening 162, and therefore, it is possible to effectively prevent the edge 153a of the key top 150 from being caught on the inner edge 163a of the opening 162.

FIG. 18 is a perspective view illustrating a configuration of a first embodiment of the guide surface 147 of the support member 140 according to the third embodiment. In the example illustrated in FIG. 18, the guide surface 147 is a flat inclined surface. An inclination angle of the guide surface 147 may be equal to the angle of the inclined surface 154 of the key top 150 or may be greater than the angle of the inclined surface 154. Therefore, the movement of the key top 150 can be smoothly performed.

### (Second Embodiment)

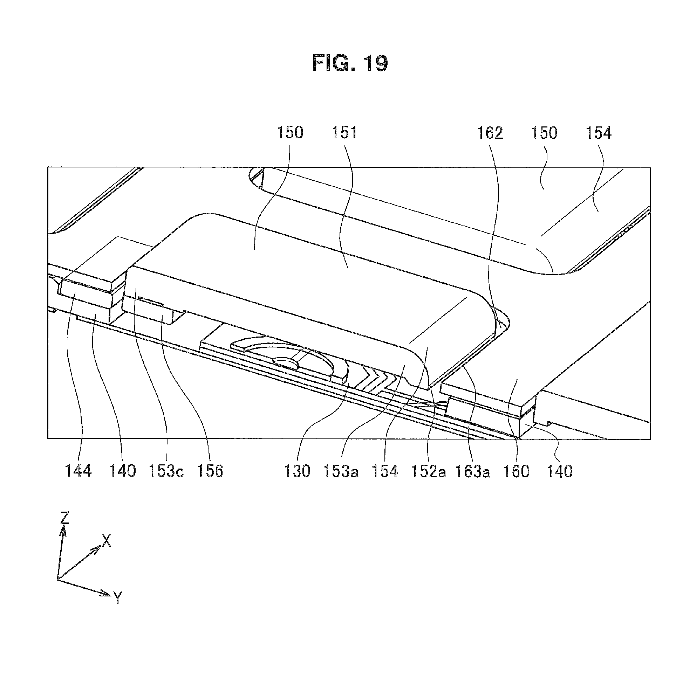

FIG. 19 is a perspective view illustrating a configuration of a second embodiment of the inclined surface 154 of the key top 150 according to the third embodiment. In the example illustrated in FIG. 19, the inclined surface 154 of the key top 150 is a curved surface (also called an R plane) formed by so-called R chamfering. Specifically, the inclined surface 154 may be convexly curved. Therefore, the esthetic appearance of the edge of the key top 150 is improved, and it is possible to effectively prevent the edge 153a of the key top 150 from contacting the inner edge 163a of the opening 162.

Regarding the inclined surface 154 having the convexly curved surface described above, as the shape of the guide surface 147 of the support member 140, the concavely curved shape illustrated in FIG. 17 described above is desirable. Therefore, since the inclined surface 154 which is the R plane can suppress the key top 150 from approaching the inner edge of the opening 162 during movement, it is possible to effectively prevent the contact with the inner edge 163a of the opening 162.

### (Third Embodiment)

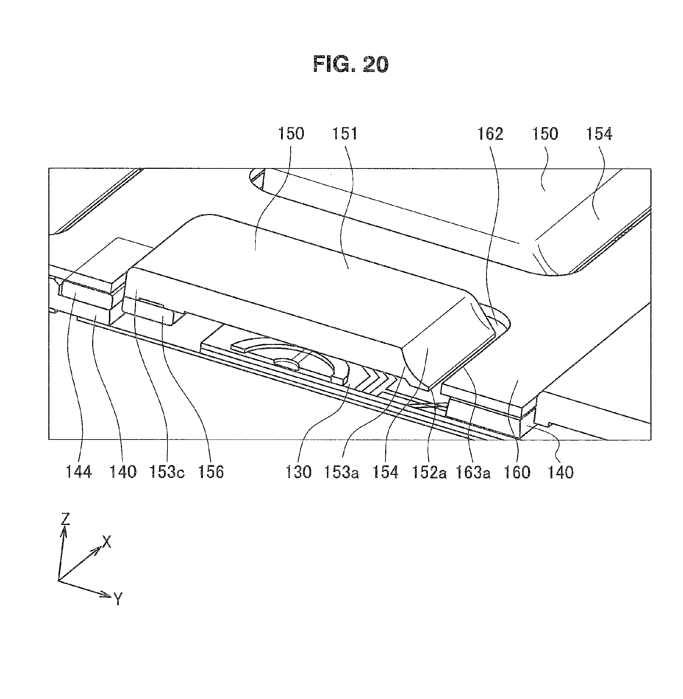

FIG. 20 is a perspective view illustrating a configuration of a third embodiment of the inclined surface 154 of the key top 150 according to the third embodiment. In the example illustrated in FIG. 20, the inclined surface 154 of the key top 150 is also a curved surface. Specifically, the inclined surface 154 may be concavely curved in a direction opposite to that of FIG. 19. In the case of this shape, it is possible to more effectively prevent the edge 153a of the key top 150 from contacting the inner edge of the opening 162.

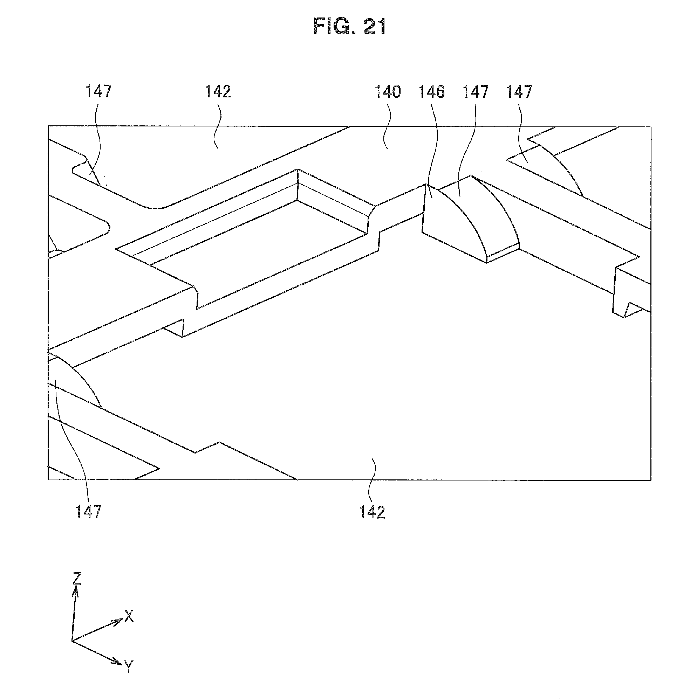

Regarding the inclined surface 154 having the concavely curved surface described above, as the shape of the guide surface 147 of the support member 140, for example, the shape illustrated in FIG. 21 is desirable in addition to the shapes illustrated in FIGS. 17 and 18.

FIG. 21 is a perspective view illustrating a configuration of a third embodiment of the guide surface 147 of the support member 140 according to the third embodiment. In the example illustrated in FIG. 21, the guide surface 147 is a curved inclined surface. More specifically, the guide surface 147 is a convexly curved surface.

### (3-2. Position Relationship between Inclined Surface of Key Top 150 and Bezel)

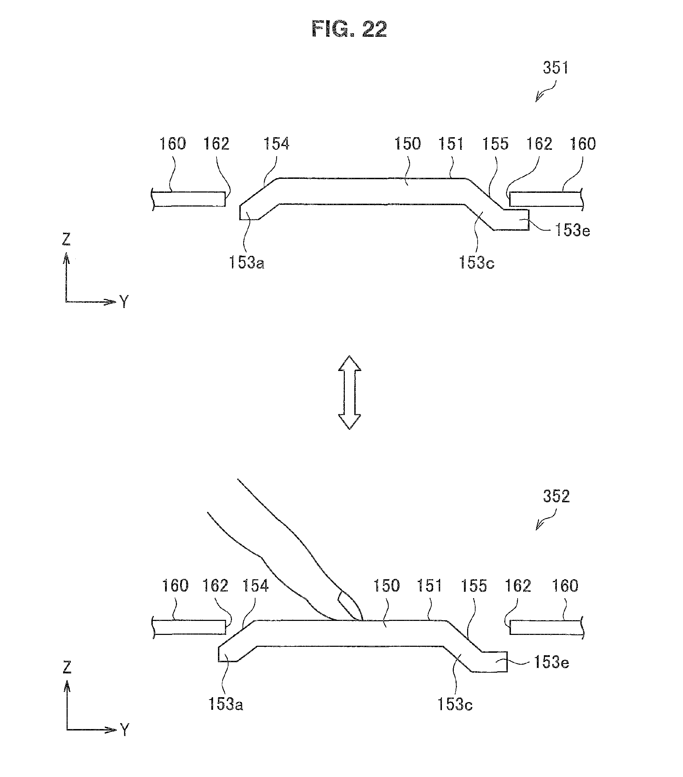

In the first embodiment, the inclined surface 154 has been described as being formed at the edge 153a (FIG. 7) of the key top 150, but it is not limited thereto. For example, as illustrated in FIG. 22, the inclined surface 154 may be formed at the edge 153c of the side opposite to the edge 153a of the key top 150. That is, the inclined surface may be formed in the edge 153c (corresponding to the second edge) that is separated from the inner edge of the opening when the key top 150 is moved from the reference position to the input position in the edge of the key top 150.

FIG. 22 is a diagram for describing a position relationship between the inclined surface of the key top 150 and the bezel 160 according to the third embodiment. A state 351 of FIG. 22 indicates the key top 150 located at the reference position, and a state 352 indicates the key top 150 located at the input position. The key top 150 includes an extension section 153e extending such that the edge 153c side enters into the lower side of the bezel 160 when located at the reference position illustrated in the state 351. Therefore, the inclined surface 155 is formed from the edge 153c to the extension section 153e.

By forming the inclined surface 155, the extension section 153e easily enters into the lower side of the bezel 160. Also, by providing the extension section 153e, when the key top 150 is moved to the input position as illustrated in the state 352 of FIG. 22, the extension section 153e is located at the opening 162, and thus, it is possible to the gap between the key top 150 and the bezel 160 from being widened. In particular, by providing the extension section 153e, the gap between the key top 150 and the bezel 160 can have a uniform width.

Incidentally, in the above, the inclined surface has been described as being formed at each of the edge 153a and the edge 153c of the key top 150, but it is not limited thereto. For example, the inclined surface may be formed at only the edge 153c of the key top 150.

### <4. Summary>

In the above-described electronic device 10, the key top 150 has the inclined surface 154 formed at the edge along the moving direction. By providing the inclined surface 154, when the key top 150 is moved, there is no interference with the inner edge of the opening 162 in which the corresponding key top 150 is arranged. Therefore, the key top 150 can be smoothly moved between the reference position and the input position. Also, by providing the inclined surface 154, it is unnecessary to widen the gap between the edge of the key top 150 and the inner edge of the opening 162, thereby improving the design of arrangement of the key tops 150.

The preferred embodiments of the present disclosure have been described in detail with reference to the appended drawings, but the technical scope of the present disclosure is not limited to such examples. It should be understood by those skilled in the art that various modifications, combinations, sub-combinations and alterations may occur depending on design requirements and other factors insofar as they are within the scope of the appended claims or the equivalents thereof.

Also, the effects described herein are only for illustrative or explanatory purposes, not limiting purposes. That is, the technologies according to the present disclosure can achieve other effects apparent to those skilled in the art from the description of the present specification, in addition to the above effects or alterative to the above effects.

Additionally, the present technology may also be configured as below.
(1) Akeyboard device including:
   a key top that is arranged in an opening of a cover member and is depressible;
   a first magnet that is provided in the key top; and
   a support section that includes a second magnet, to which the first magnet is attracted, and supports the key top,
   wherein the support section supports the key top to move in a moving direction intersecting with a height direction of the key top, between a first position where the first magnet is attracted to the second magnet and a second position where the attraction by pressing is released, and
   wherein the key top has an inclined surface formed at an edge along the moving direction.
(2) The keyboard device according to (1),
   wherein the inclined surface is formed in parallel to the moving direction.
(3) The keyboard device according to (1) or (2),
   wherein the inclined surface is formed at a first edge close to an inner edge of the opening when the key top is moved from the first position to the second position in the edge of the key top.
(4) The keyboard device according to any one of (1) to (3),
   wherein the inclined surface is a surface that connects a top surface and a side surface of the key top.
(5) The keyboard device according to (4),
   wherein the inclined surface is a flat surface.
(6) The keyboard device according to (4),
   wherein the inclined surface is a curved surface.
(7) The keyboard device according to (3),
   wherein when the key top is located at the first position, a distance between the first edge of the key top and the inner edge of the opening that the first edge faces is equal to a distance between the second edge perpendicular to the first edge of the key top and the inner edge of the opening that the second edge faces.
(8) The keyboard device according to any one of (1) to (7), further including:
   a first housing in which the key top is provided; and
   a second housing that is movable while sliding with respect to the first housing,
   wherein an end portion of the second housing contacts the inclined surface, when sliding.
(9) The keyboard device according to (5) or (6),
   wherein the support section has a guide surface that guides the movement of the key top between the first position and the second position, and
   wherein the guide surface is a flat surface.
(10) The keyboard device according to (5) or (6),
   wherein the support section has a guide surface that guides the movement of the key top between the first position and the second position, and
   wherein the guide surface is a curved surface.
(11) The keyboard device according to (1) or (2),
   wherein the inclined surface is formed at a second edge that is separated from an inner edge of the opening when the key top is moved from the first position to the second position in the edge of the key top.
(12) The keyboard device according to (11),
wherein the key top includes an extension section extending in a manner that, when the key top is located at the first position, the key top enters from a second edge side to a lower portion of the opening.

## Claims

1. A keyboard device comprising:
a key top that is arranged in an opening of a cover member and is depressible;
a first magnet that is provided in the key top; and
a support section that includes a second magnet, to which the first magnet is attracted, and supports the key top,
wherein the support section supports the key top to move in a moving direction intersecting with a height direction of the key top, between a first position where the first magnet is attracted to the second magnet and a second position where the attraction by pressing is released, and
wherein the key top has an inclined surface formed at an edge along the moving direction.

2. The keyboard device according to claim 1,
wherein the inclined surface is formed in parallel to the moving direction.

3. The keyboard device according to claim 1,
wherein the inclined surface is formed at a first edge close to an inner edge of the opening when the key top is moved from the first position to the second position in the edge of the key top.

4. The keyboard device according to claim 1,
wherein the inclined surface is a surface that connects a top surface and a side surface of the key top.

5. The keyboard device according to claim 4,
wherein the inclined surface is a flat surface.

6. The keyboard device according to claim 4,
wherein the inclined surface is a curved surface.

7. The keyboard device according to claim 3,
wherein when the key top is located at the first position, a distance between the first edge of the key top and the inner edge of the opening that the first edge faces is equal to a distance between the second edge perpendicular to the first edge of the key top and the inner edge of the opening that the second edge faces.

8. The keyboard device according to claim 1, further comprising:
a first housing in which the key top is provided; and
a second housing that is movable while sliding with respect to the first housing,
wherein an end portion of the second housing contacts the inclined surface, when sliding.

9. The keyboard device according to claim 5,
wherein the support section has a guide surface that guides the movement of the key top between the first position and the second position, and
wherein the guide surface is a flat surface.

10. The keyboard device according to claim 5,
wherein the support section has a guide surface that guides the movement of the key top between the first position and the second position, and
wherein the guide surface is a curved surface.

11. The keyboard device according to claim 1,
wherein the inclined surface is formed at a second edge that is separated from an inner edge of the opening when the key top is moved from the first position to the second position in the edge of the key top.

12. The keyboard device according to claim 11,
wherein the key top includes an extension section extending in a manner that, when the key top is located at the first position, the key top enters from a second edge side to a lower portion of the opening.
